# EUROPEAN PATENT SPECIFICATION

(11) **EP 2 594 000 B1**
(45) Date of publication and mention of the grant of the patent: **13.08.2014**
(21) Application number: 11735681.6
(22) Date of filing: 03.05.2011
(51) Int. Cl.: H02G 15/013

(54) **WATERTIGHT CABLE CONNECTIONS**
WASSERDICHTE KABELVERBINDUNGEN
RACCORDS DE CÂBLE ÉTANCHES

(30) Priority: 30.04.2010 GB 201007171
(43) Date of publication of application: 22.05.2013
(73) Proprietor: CMS (Cable Management Supplies) Plc, Hawley Lane, Farnborough, Hampshire GU14 8EH (GB)
(72) Inventor: THOMAS, Dafydd, Merseyside WA12 0JQ (GB)
(74) Representative: Wilson Gunn
(86) International application number: PCT/GB2011/050861
(87) International publication number: WO 2011/135383

(56) References cited:
- WO-A2-2008/009969
- FR-A- 1 473 304
- FR-A1- 2 719 164
- US-A1- 2007 230 857

## Description

The present invention relates to watertight cable connections and in particular to such connections adapted to allow a cable to be introduced into a water pipe or similar.

In order to install a new node to a hardwired network or indeed to provide a new hardwired network, it is necessary to provide a cable linking the node to the various other nodes in the network. Often, such as in the case of cable television networks, this will require providing a branch cable connecting the new node to an existing trunk cable via which connection to the other nodes may be effected. The trunk cables will typically be laid in a pattern between one or more potential nodes, for instance the trunk cables may follow the local street pattern. The branch cables may then need to travel some distance from the trunk cable to reach the building in which the node is to be located.

In our co-pending application No PCT/GB2009/051172 there is provided a method of laying a branch cable between a trunk cable and a desired node location comprising the steps of: locating a pre-existing pipe for the node location adjacent to the trunk cable; introducing the branch cable into the pre-existing pipe; passing the branch cable along the pre-existing pipe; and removing the branch cable from the pre-existing pipe adjacent to the node location. This reduces disruption to the property of the homeowner by negating the requirement to dig a potentially expensive and/or unsightly trench through their garden in which to lay the cable.

The document FR 1 473 304 A discloses a connection system comprising a connector unit and a ferrule.

To facilitate introduction of the cable to the pre-existing pipe a cable transfer means comprising a Y-junction inserted into a gap provided in the pre-existing pipe can be provided. In such cases, the leg and one arm of the Y-junction may be adapted to be connected to the pre-existing pipe and the other arm may be capped with an end closure having a cable passage provided therethrough.

The end closure must be watertight to prevent water leaking from the pipe. This can be achieved by the use of a deformable bung or similar inserted into the opening at the end of the arm. This does not however provide a ready means by which the cable can be changed or replaced in the event of damage, malfunction or upgrade of the network.

It is an object of the present invention to provide a watertight cable connection adapted to allow a cable to be introduced into a water pipe or similar that at lkeast partly overcomes or alleviates the above problems.

According to a first aspect of the present invention there is provided a cable connection system according to claim 1.

The above system provides a means by which a watertight connection may be formed between a length of cable within a pipe and a length of cable outside the pipe through a suitable opening. The positioning of the seal between the ferrule and the connector unit within the inner portion of the socket whilst the outer skirt engages with the exterior of the socket provides ease and certainty of connection and protects the seals from impacts and tension applied to the cable.

The cable is preferably an optical cable. The cable is preferably provided with an insulating sheath. The cable may be a single core or multi-core cable as desired. The cable may be provided within a cable duct or adapted to be laid within a cable duct. The cable duct may be of substantially elongate tubular form.

The exterior of the torso may be adapted to seal with the opening by the provision of one or more o-rings within retaining grooves. The torso may further be provided with a radially projecting rib adapted to engage with the opening provided.

The ferrule is preferably adapted to form a substantially watertight seal around the cable or the cable duct, as appropriate. To achive this, the internal bore of the ferrule may be matched to the outer diameter of the cable or the cable duct, as appropriate. The cable or the cable duct may be retained within the internal bore of the ferrule by adhesive.

The projecting plug may be formed integrally with the outer skirt or may be attached thereto by a suitable sealing ring. The plug may form a seal against one or more o-rings disposed at the base of the passage. The o-rings may be forced against the ends of the torso and the internal walls or the socket by the plug. The end portion of the plug may be adapted to engage with the o-rings. Additionally or alternatively, the exterior of the end portion may be adapted to engage with the interior of the passage.

The plug may comprise a single part construction. Alternatively, the end portion of the plug may be a separate component attached to the rest of the plug. In further embodiments, the plug may be provided with an extended barrel portion connecting a base portion of the plug incorporating the internal bore and the end portion of the plug.

According to a second aspect of the present invention there is provided a connector unit according to claim 7.

The connector unit of the second aspect of the present invention may incorporate any or all features of the first aspect of the present invention as desired or as required.

According to a third aspect of the present invention there is provided a ferrule according to claim 9.

The ferrule of the third aspect of the present invention may incorporate any or all features of the first aspect of the present invention as desired or as required.

According to a fourth aspect of the present invention there is provided a method of enabling the entry of a cable into a pipe comprising the steps of: providing a suitable opening in the pipe; inserting a connector unit according to the present invention within the opening in the pipe; providing a length of cable within the pipe and a length of cable outside the pipe with ferrules according to the present invention or providing a length of cable duct within the pipe and a length of cable duct outside the pipe with ferrules according to the present invention; and engaging the ferrules with the sockets of the connector unit.

The method of the fourth aspect of the present invention may incorporate any or all features of the first, second or third aspects of the present invention as desired or as required.

The pipe may be any suitable pipe. As an example, the pipe may be a water supply pipe or a waste water pipe such as a sewer, drain or similar. The method may comprise the further steps of forming a gap in the pipe, inserting a Y-Junction into the gap and inserting the connector unit into the open end of one arm of the Y-junction. Preferably, the Y-junction comprises the leg and one arm adapted to be connected to the pipe and another arm capped with an end closure having a cable passage provided therethrough.

According to a fifth aspect of the present invention there is provided a network according to claim 15.

The network of the fifth aspect of the present invention may incorporate any or all features of the first, second, third or fourth aspects of the present invention as desired or as required.

The network may comprise one or more trunk cables and one or more branch cables. The connector system according to the first aspect of the present invention, connector unit according to the second aspect of the present invention, ferrule according to the third aspect of the present invention or method according to the fourth aspect of the present invention may be utilised in connection with any one or more of either the trunk cables or the branch cables. In some embodiments, the connector system according to the first aspect of the present invention, connector unit according to the second aspect of the present invention, ferrule according to the third aspect of the present invention or method according to the fourth aspect of the present invention may be utilised in connection with the branch cables. In such embodiments the trunk cable may be laid in a dedicated conduit or may be laid along a sewer. In particular, the trunk cable may be laid according to the disclosure of our co-pending application WO2008/009969. In this prior application there is provided a method of laying a cable between two points comprising the steps of: laying a cable through one or more lengths of sewer between the two points; and where there is no convenient length of sewer or a gap between convenient lengths of sewer, providing a length of dedicated cable conduit between said lengths of sewer and laying said cable through said dedicated cable conduit. In this context, it should be understood that in addition to or in place of sewers, trunk cables may be laid along water supply pipes, roadside drains, storm drains or similar.

In order that the invention is more clearly understood, one embodiment will be described further herein, by way of example only, and with reference to the following drawings, in which:
- Figure 1: is a cross-sectional view of a connection system according to the present invention;
- Figure 2: is a partial cutaway view of an alternative embodiment of a connection system according to the present invention;
- Figure 3a: is an exploded side view of the connection system of figure 2;
- Figure 3b: is an exploded perspective view of the connection system of figure 2;

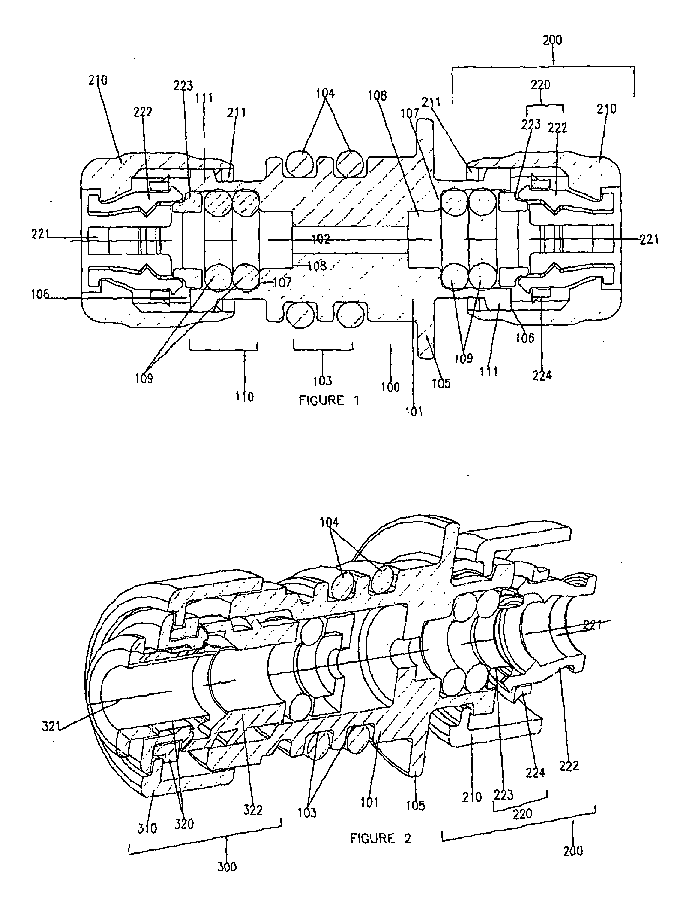

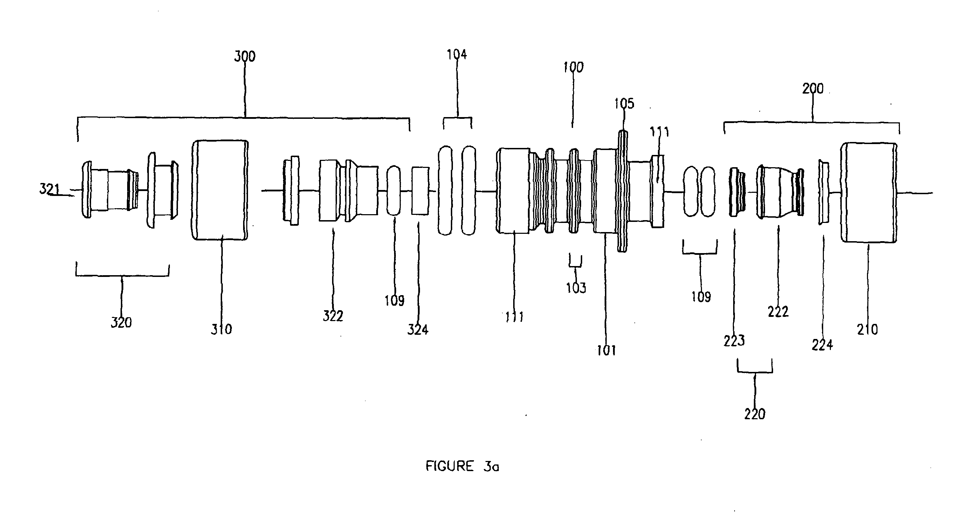

- Figure 3a: is an exploded cutaway view of the connection system of figure 2;

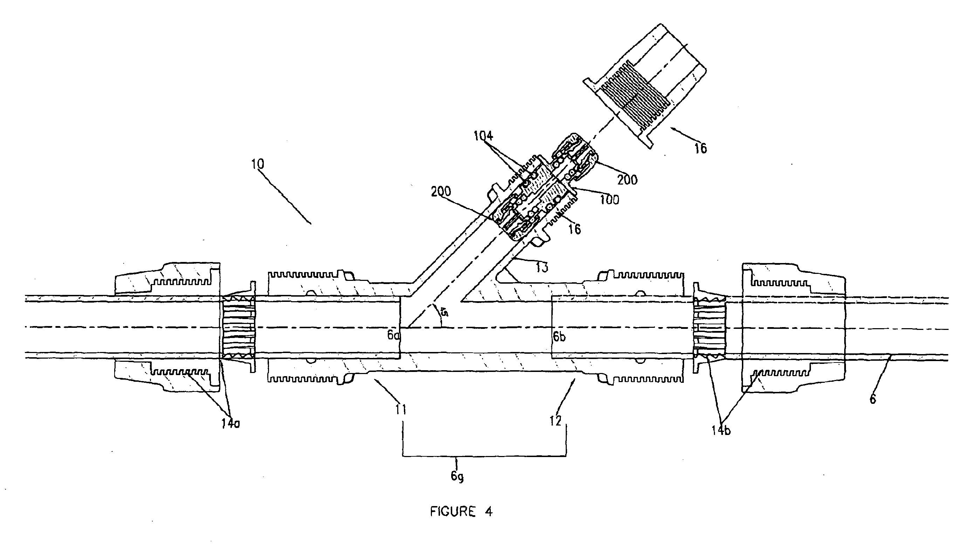

- Figure 4: is a schematic illustration of the connection system of figure 1 in use to introduce a cable into a water pipe using a Y connector; and

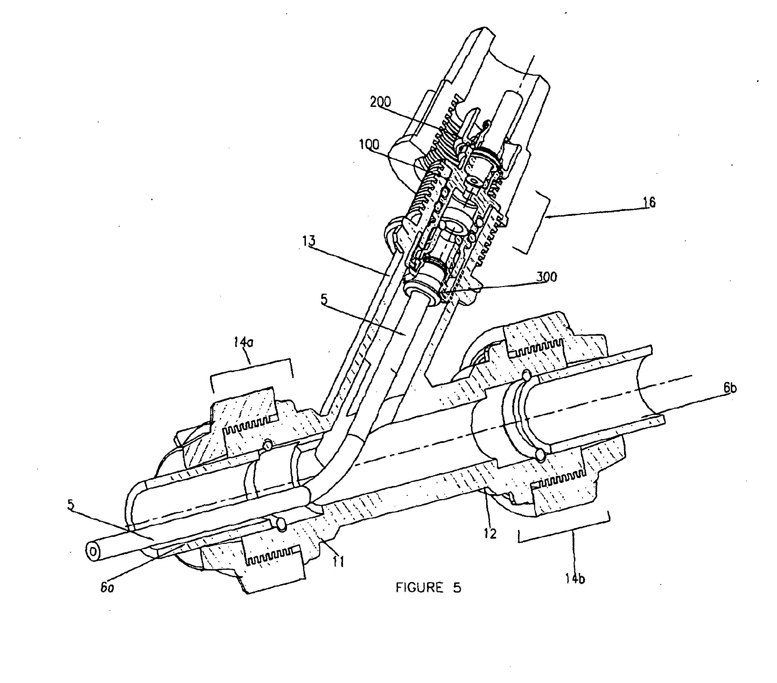

- Figure 5: is a schematic illustration of the connection system of figure 2 in use to introduce a cable into a water pipe using a Y connector.

Referring now to figure 1, a cable connection system of the present invention comprises a connector unit 100 adapted to provide a watertight connection between and two ferrules 200. The ferrules 200 are fitted either to the ends of a cable (not shown in figure 1) or to the ends of a cable duct (also not shown in figure 1) carrying a cable therein.

The connection unit 100 comprises a torso 101 having a central bore 102. The torso has a pair of retaining grooves 103 within which are provided o-rings 104. The o-rings 104 enable the connector unit 100 to be inserted into a suitable opening and form a watertight seal with the opening. The connection unit 100 is further provided with an external projecting rib 105. This can also engage with an opening, if required.

At each end 106 of the torso 101 are provided axially extending passages 110. The passages 110 are provided with an outwardly projecting end rim 111. Each end 106 of the torso 101 may comprise an abutting surface 107 and a recess 108. The passages 110 define sockets for receiving a corresponding plug provided by the ferrules 200.

Turning now to the ferrules 200, these comprise an outer skirt 210 and an projecting plug 220. The skirt 210 is adapted to engage with the exterior of the passages 110 and is provided with an inwardly projecting rim 211 to engage with rim 111 of passages 110. The rims 111, 211 have corresponding snap-fitting features such that the plug 220 can readily be inserted into the socket. Once inserted into the socket, the rims 111, 211 resist the withdrawal of the plug 220. The size and flexibility of the rims 111, 211 can be adapted to ensure that the connection is secure in normal use. The size and flexibility of the rims 111, 211 can also adapted such that disengagement occurs in response to a lower axial force than is required to break the cable or remove the cable from the ferrule 200.

The plug 220 of figure 1 has an inner bore 221 adapted to match the outer diameter of the cable or cable duct (as appropriate). Typically, the end of the cable or cable duct is inserted into the inner bore 221 and retained therein by means of adhesive. The adhesive also helps maintain a watertight seal between the cable or cable duct and the bore 221.

The plug 220 of figure 1 has an outer cover 222 and an end portion 223. The end portion 223 is adapted to engage with the passage 110 when the plug 220 is inserted thereto. In order to provide a watertight seal one or more socket o-rings 109 may be provided which in use are compressed between end portion 223 and abutting surface 107. The embodiment of figure 1 further provides an engagement ring 224 retaining the cover 222 in position relative to the bore 221.

In use, cables or cable ducts (as appropriate) fitted with ferrules 200 can be inserted into each passage of the connection unit 100. As such, a water tight connection is formed between the ferrules 200 and the passages 110. If the connection unit 100 is inserted into a corresponding opening in a water pipe (or any other suitable opening such as an open end of an arm of a Y-junction), this allows a watertight connection to be formed between a cable lying in the pipe and a cable outside the pipe. Typically, the connector unit and ferrules are adapted to be used with single core or multi-core optical cables having an insulating sheath.

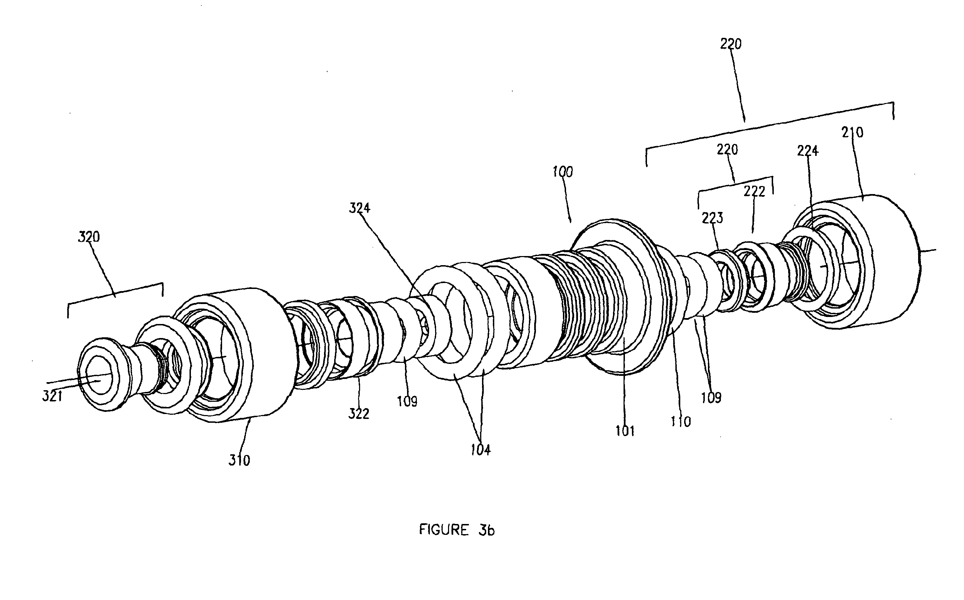

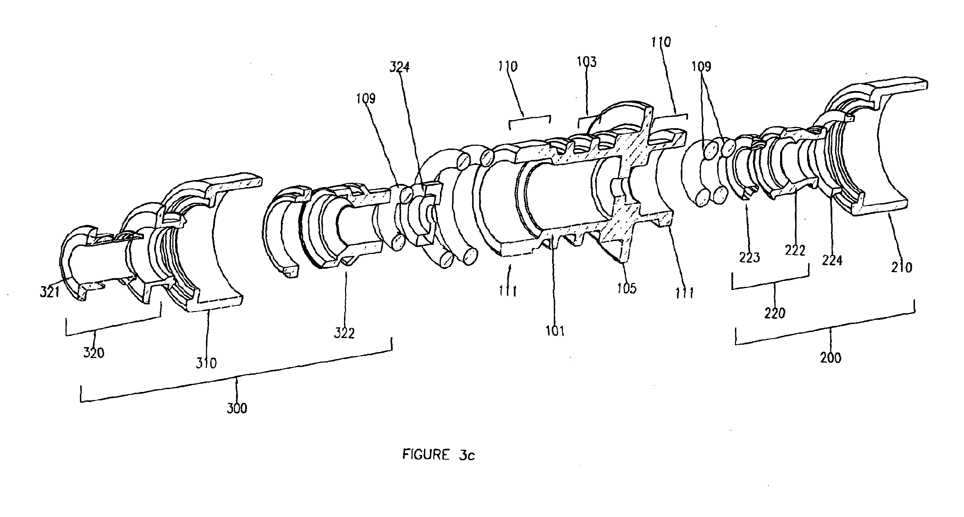

Turning now to figures 2 and 3, further views of a connection unit 100 are shown, the connection unit engaged with a first ferrule 200 of the type described in relation to figure 1 and also engaged with a second type of ferrule 300.

The second type of ferrule 300 has an outer skirt 310 and a projecting plug 320 having an inner bore 321. The skirt 310 however omits an inwardly projecting rim and is instead adapted to directly abut the rim 111.

The plug 220 is provided with a barrel potion 322 extending from the bore 321. The end of the barrel portion is adapted to engage with an o-ring 109. In the example shown in the diagram, an abutting spacer rim 324 is provided between the abutting surface 107 and the o-ring 109. It is of course possible for a second o-ring 109 to be substituted for the abutting spacer rim 324, if desired.

An example of the connection system of figure 1 in use is shown in figure 4. In this example, a cable is laid along a water supply pipe 6. In order to allow the cable to exit the pipe 6, the water supply to pipe 6 is turned off and a pair of cuts are made in the pipe 6 leaving a gap 6g. A Y-junction 10 is inserted in the gap 6g in pipe 6. The Y-junction 10 comprises a leg 11 and two arms 12 and 13. Leg 11 and arm 12 are aligned along a common axis. Arm 13 projects from the Y-junction at an angle to the common axis. The ends of leg 11 and are 12 are open and provided with fittings 14a, 14b to enable watertight connection to open ends 6a, 6b in water supply pipe 6. When connected thus, a water flow path is provided between 6a and 6b along leg 11 and arm 12.

The arm 13 is capped with a connector unit 100, a watertight seal being formed between o-rings 104 and the arm 13. The connector unit 100 is secured in position using fitting 16. This allows a length of cable fitted with a ferrule 200 laid within the pipe 6 to be connected in a watertight manner to a second length of cable fitted with a ferrule 200 but laid outside the pipe 6.

Figure 5, provides a further illustration of the invention in use, this time also showing a cable 5 fitted with a ferrule 300 laid within pipe 6. The skilled man will of course appreciate that cable 5 could equally be replaced by a tubular cable duct, along which a cable could lie.

It is of course to be understood that the present invention is not to be limited to the details of the above embodiment which are described by way of example only.

## Claims

1. A cable connection system suitable for use in introducing a cable through an opening provided into a water pipe or similar, the connection system comprising: a connector unit (100) and one or more ferrules (200) adapted to interconnect therewith wherein the connector unit comprises: a solid torso (101) having an exterior adapted to engage and form a watertight seal with the internal edges of the opening and also having an axial bore (102) extending therethrough; and axially projecting passages (110) provided at either end of the torso (101), the internal edges of the passage (110) and the ends of the torso (101) defining ferrule (200) receiving sockets; and wherein the ferrule (200) comprises: an outer skirt (210) adapted to fit around the exterior of the projecting passages (110) of the connector unit (100); and a projecting plug (220), the plug (220) having an axial bore (221) for carrying a cable and an exterior adapted to engage and form a watertight seal with the internal edges of the socket defined by the passages (110) of the connector unit (100), **characterised in that** the passages (110) are provided with an outwardly projecting rim (111); the outer skirt (210) is provided with an inwardly projecting rim (211) and the projecting rims (111) of the passages (110) and the skirts are adapted to engage and the rims are adapted to disengage under the application of a level of axial force lower than the normal axial force required to remove the cable or cable duct from the axial bore (221) of the ferrule (200) or the normal axial force required to break the cable or cable duct.

2. A cable connection system as claimed in claim 1 **characterised in that** the exterior of the torso (101) is adapted to seal with the opening by the provision of one or more o-rings (104) within retaining grooves.

3. A cable connection system as claimed in any preceding claim **characterised in that** the torso (101) is provided with a radially projecting rib (105) adapted to engage with the opening provided.

4. A cable connection system as claimed in any preceding claim **characterised in that** the projecting plug (220) is formed integrally with the outer skirt (210) or is attached thereto by a sealing ring (109).

5. A cable connection system as claimed in any preceding claim **characterised in that** the plug (220) forms a seal against one or more o-rings disposed at the base of the passage (110).

6. A cable connection system as claimed in any preceding claim **characterised in that** the plug (200) is provided with an extended barrel portion connecting a base portion of the plug (220) incorporating the internal bore and the end portion of the plug (220).

7. A connector unit (100) suitable for use in a connection system of any one of claims 1 to 6, the connector unit comprising: a solid torso (101) having an exterior adapted to engage and form a watertight seal with the internal edges of the opening and also having an axial bore (102) extending therethrough; and axially projecting passage (110) provided at either end of the torso (101), the internal edges of the passage (110) and the ends of the torso defining ferrule (200) receiving sockets, the passages (110) are provided with an outwardly projecting rim (111) adapted to engage with an inwardly projecting rim (211) of an outer skirt (210) of a ferrule (200) and the rims are adapted to disengage under the application of a level of axial force lower than the normal axial force required to remove the cable or cable duct from the axial bore (221) of the ferrule (200) or the normal axial force required to break the cable or cable duct.

8. A connector unit (100) as claimed in claim 7 **characterised in that** the torso (101) provided with a radially projecting rib (105) adapted to engage with the opening provided.

9. A ferrule (200) suitable for use in a connection system of according to any one of claims 1 to 6, the ferrule comprising: an outer skirt (210) adapted to fit around the exterior of the projecting passages (110) of a connector unit (100); and a projecting plug (220), the plug (220) having an axial bore (221) for carrying a cable or a cable duct and an exterior adapted to engage and form a watertight seal with the internal edges of the socket defined by the passages (110) of the connector unit (100), **characterised in that** the outer skirt (210) is provided with an inwardly projecting rim (211) adapted to engage with an outwardly projecting rim (111) of the passage (110) and the rims are adapted to disengage under the application of a level of axial force lower than the normal axial force required to remove the cable or cable duct from the axial bore of the ferrule (200) or the normal axial force required to break the cable or cable duct.

10. A ferrule (200) as claimed in claim 9 **characterised in that** the plug (220) forms a seal against one or more o-ring (104) disposed at the base of the passage (110).

11. A ferrule (200) as claimed in any one of claims 9 or 10 **characterised in that** the plug (220) is provided with an extended barrel portion connecting a base portion of the plug (220) incorporating the internal bore and the end portion of the plug (220).

12. A method of enabling the entry of a cable into a pipe comprising the steps of:
providing a suitable opening in the pipe; inserting a connector unit (100) according to any one of claims 7 to 8 within the opening in the pipe; providing a length of cable within the pipe and a length of cable outside the pipe with ferrules (220) according to any one of claims 9 to 11 or providing a length of cable duct within the pipe and a length of cable duct outside the pipe with ferrules (200) according to any one of claims 9 to 11; and engaging the ferrules (200) with the sockets of the connector unit (100).

13. A method as claimed in claim 12 **characterised in that** the pipe is a water supply pipe or a waste water pipe.

14. A method as claimed in claim 12 or claim 13 **characterised in that** the method comprises the further steps of forming a gap in the pipe, inserting a Y-Junction into the gap and inserting the connector unit (100) into the open end of one arm of the Y-junction.

15. A network **characterised in that** one or more cables within the network are connected by a connector system according to claims 1 to 6, a connector unit (100) according to claims 7 to 8, a ferrule (200) according to claims 9 to 11, or wherein one or more cables are introduced to pipes using a method according to claims 12 to 14.

## Patentansprüche

1. Kabelverbindungssystem, das geeignet ist zur Verwendung bei der Einführung eines Kabels durch eine Öffnung, welche in einer Wasserleitung oder ähnlichem vorgesehen ist, wobei das Verbindungssystem aufweist: eine Verbindungseinheit (100) und eine oder mehrere Hülsen (200), die angepasst sind, diese miteinander zu verbinden, wobei die Verbindungseinheit aufweist: einen festen Körper (101) mit einer Außenseite, die angepasst ist, um eine wasserdichte Dichtung mit den Innenkanten der Öffnung zu bilden und in Eingriff zu bringen und auch mit einer axialen Bohrung (102), die sich dort hindurch erstreckt; und axial vorstehenden Durchgängen (110), die an beiden Enden des Torsos (101) vorgesehen sind, und die Innenkanten des Durchganges (110) und die Enden des Körpers (101) Buchsen aufnehmende Hülse (200) definieren, und wobei die Hülse (200) aufweist: eine äußere Einfassung (210), die angepasst ist, um um die Außenseite der vorstehenden Durchgänge (110) der Verbindungseinheit (100) herum zu passen; und einen vorstehenden Verschluss (220), wobei der Verschluss (220) eine axiale Bohrung (221) zum Tragen eines Kabels und eine Außenseite aufweist, die angepasst ist, um einzukuppeln und eine wasserdichte Dichtung mit den Innenkanten der Buchsen zu bilden, die durch die Durchgänge (110) der Verbindungseinheit (100) definiert werden,
**dadurch gekennzeichnet,**
**dass** die Durchgänge (110) mit einem nach außen vorstehenden Rand (111) versehen sind; und die äußere Einfassung (210) mit einem nach innen gerichteten vorstehenden Rand (211) versehen ist und die vorstehenden Ränder (111) der Durchgänge (110) und die Einfassungen angepasst sind, um einzukuppeln und die Ränder angepasst sind, um unter der Anwendung eines axialen Kraftbetrages auszulösen, der kleiner ist als die normale axiale Kraft, welche erforderlich ist, um das Kabel oder die Kabelleitung aus der axialen Bohrung (221) der Hülse (200) zu entfernen oder der normalen axialen Kraft, die erforderlich ist, um das Kabel oder die Kabelleitung zu brechen.

2. Kabelverbindungssystem nach Anspruch 1,
**dadurch gekennzeichnet,**
**dass** die Außenseite des Körpers (101) angepasst ist, um durch das Vorsehen von einem oder mehreren O-Ringen (104) innerhalb zurückhaltender Rillen mit der Öffnung abzudichten.

3. Kabelverbindungssystem nach einem vorstehenden Anspruch,
**dadurch gekennzeichnet,**
**dass** der Körper (101) mit einer radial vorstehenden Rippe (105) versehen ist, die angepasst ist, um mit der vorgesehenen Öffnung einzukuppeln.

4. Kabelverbindungssystem nach einem vorstehenden Anspruch,
**dadurch gekennzeichnet,**
**dass** der vorstehende Verschluss (220) integral mit der äußeren Einfassung (210) gebildet ist oder daran durch einen Dichtungsring (109) befestigt ist.

5. Kabelverbindungssystem nach einem vorstehenden Anspruch,
**dadurch gekennzeichnet,**
**dass** der Verschluss (220) eine Dichtung gegen einen oder mehrere O-Ringe bildet, die an dem Sockel des Durchganges (110) angeordnet sind.

6. Kabelverbindungssystem nach einem vorstehenden Anspruch,
**dadurch gekennzeichnet,**
**dass** der Verschluss (220) mit einem verlängerten Zylinderabschnitt versehen ist, welcher eine Sockelabschnitt des Verschlusses (220), welcher die innere Bohrung enthält, und den Endabschnitt des Verschlusses (220) verbindet.

7. Verbindungseinheit (100), die geeignet ist zur Verwendung in einem Verbindungssystem nach einem der Ansprüche 1 bis 6, wobei die Verbindungseinheit aufweist: einen festen Körper (101) mit einer Außenseite, die angepasst ist, um einzukuppeln und eine wasserdichte Dichtung mit den Innenkanten der Öffnung und auch mit einer axialen Bohrung (102), die sich dort hindurch erstreckt, zu bilden; und axial vorstehenden Durchgängen (110), die an beiden Enden des Körpers (101) vorgesehen sind, wobei die Innenkanten des Durchganges (110) an den Enden des Körpers Buchsen aufnehmende Hülsen (200) definieren,
**dadurch gekennzeichnet,**
**dass** die Durchgänge mit einem nach außen vorstehenden Rand (111) versehen sind, der angepasst ist, um mit einem einwärts vorstehenden Rand (211) einer äußeren Einfassung (210) einer Hülse (200) einzukuppeln und die Ränder angepasst sind, um unter der Anwendung eines axialen Kraftbetrages auszulösen, der kleiner ist als die normale axiale Kraft, welche erforderlich ist, um das Kabel oder die Kabelleitung aus der axialen Bohrung (221) der Hülse (200) zu entfernen oder der normalen axialen Kraft, die erforderlich ist, um das Kabel oder die Kabelleitung zu brechen.

8. Verbindungseinheit (100) nach Anspruch 7,
**dadurch gekennzeichnet,**
**dass** der Körper (101) mit einer radial vorstehenden Rippe (105) versehen ist, die angepasst ist, um mit der vorgesehenen Öffnung einzukuppeln.

9. Hülse (200), die geeignet ist zur Verwendung in einem Verbindungssystem nach einem der Ansprüche 1 bis 6, wobei die Hülse aufweist: eine äußere Einfassung (210), die angepasst ist, um um die Außenseite der vorstehenden Durchgänge (110) einer Verbindungseinheit (100) herum zu passen, und einen vorstehenden Verschluss (220), wobei der Verschluss (220) eine axiale Bohrung (221) zum Tragen eines Kabels oder einer Kabelleitung und eine Außenseite aufweist, die angepasst ist, um einzukuppeln und eine wasserdichte Dichtung mit den Innenkanten der Buchse zu bilden, die durch die Durchgänge (110) der Verbindungseinheit (100) definiert werden,
**dadurch gekennzeichnet,**
**dass** die äußere Einfassung (210) mit einem einwärts vorstehenden Rand (211) versehen ist, der angepasst ist, um mit einem nach außen vorstehenden Rand (111) des Durchganges (110) einzukuppeln und die Ränder angepasst sind, um unter der Anwendung eines axialen Kraftbetrages auszulösen, der kleiner ist als die normale axiale Kraft, welche erforderlich ist, um das Kabel oder die Kabelleitung aus der axialen Bohrung der Hülse (200) zu entfernen oder die normale axiale Kraft, die erforderlich ist, um das Kabel oder die Kabelleitung zu brechen.

10. Hülse (200) nach Anspruch 9,
**dadurch gekennzeichnet,**
**dass** der Verschluss (220) eine Dichtung gegen einen oder mehrere O-Ringe (104) bildet, die an dem Sockel des Durchganges (110) angeordnet sind.

11. Hülse (200) nach einem der Ansprüche 9 oder 10,
**dadurch gekennzeichnet,**
**dass** der Verschluss (220) mit einem verlängerten Zylinderabschnitt versehen ist, der einen Sockelabschnitt des Verschlusses (220), welcher die Innenbohrung enthält, und den Endabschnitt des Verschlusses (220) verbindet.

12. Verfahren zum Ermöglichen des Eintritts eines Kabels in eine Leitung mit den Schritten: Bereitstellen einer geeigneten Öffnung in der Leitung; Einsetzen einer Verbindungseinheit (100) nach einem der Ansprüche 7 bis 8 innerhalb der Öffnung in der Leitung; Bereitstellen einer Kabellänge innerhalb der Leitung und einer Kabellänge außerhalb der Leitung mit Hülsen (200) nach einem der Ansprüche 9 bis 11 oder Bereitstellen einer Kabelkanallänge innerhalb der Leitung und einer Kabelkanallänge außerhalb der Leitung mit Hülsen (200) nach einem der Ansprüche 9 bis 11; und Einkuppeln der Hülsen (200) mit den Buchsen der Verbindungseinheit (100).

13. Verfahren nach Anspruch 12,
**dadurch gekennzeichnet,**
**dass** die Leitung eine Wasserzufuhrleitung oder eine Abwasserleitung ist.

14. Verfahren nach Anspruch 12 oder Anspruch 13,
**dadurch gekennzeichnet,**
**dass** das Verfahren die weiteren Schritte aufweist: Bilden einer Lücke in der Leitung, Einsetzen einer Y-Verzweigung in die Lücke und Einsetzen der Verbindungseinheit (100) in das offene Ende von einem Arm der Y-Verzweigung.

15. Netzwerk,
**dadurch gekennzeichnet,**
**dass** ein oder mehrere Kabel innerhalb des Netzwerkes mit einem Verbindungssystem nach einem der Ansprüche 1 bis 6 verbunden sind, einer Verbindungseinheit (100) nach einem der Ansprüche 7 bis 8, einer Hülse (200) nach einem der Ansprüche 9 bis 11, oder wobei ein oder mehrere Kabel unter Verwendung eines Verfahrens nach einem der Ansprüche 12 bis 14 in Leitungen eingeführt werden.

## Revendications

1. Système de connexion de câble approprié pour une utilisation lors de l'introduction d'un câble à travers une ouverture disposée dans une canalisation d'eau ou similaire, le système de connexion comprenant : une unité connecteur (100) et une ou plusieurs bagues (200) adaptées pour s'interconnecter avec celle-ci, dans lequel l'unité connecteur comprend : un corps plein (101) qui présente un extérieur adapté pour venir en prise et former un joint d'étanchéité imperméable à l'eau, avec les bords intérieurs de l'ouverture, et qui présente également un alésage axial (102) qui s'étend à travers ; et des passages qui font saillie de manière axiale (110) disposés au niveau de l'une ou l'autre extrémité du corps (101), les bords intérieurs du passage (110) et les extrémités du corps (101) définissant des douilles de réception de bague (200) ; et dans lequel la bague (200) comprend : une jupe extérieure (210) adaptée pour s'ajuster autour de l'extérieur des passages qui font saillie (110) de l'unité connecteur (100) ; et un bouchon qui fait saillie (220), le bouchon (220) présentant un alésage axial (221) destiné à porter un câble et un extérieur adapté pour venir en prise et former un joint d'étanchéité imperméable à l'eau, avec les bords intérieurs de la douille définie par les passages (110) de l'unité connecteur (100), **caractérisé en ce que** les passages (110) sont dotés d'un rebord qui fait saillie vers l'extérieur (111) ; la jupe extérieure (210) est dotée d'un rebord qui fait saillie vers l'intérieur (211) et les rebords qui font saillie (111) des passages (110) et les jupes sont adaptés de façon à venir en prise et les rebords sont adaptés de façon à se dégager sous l'application d'un niveau de force axiale inférieur à celui de la force axiale normale nécessaire pour retirer le câble ou le conduit de câbles de l'alésage axial (221) de la bague (200) ou de la force axiale normale nécessaire pour rompre le câble ou le conduit de câbles.

2. Système de connexion de câble selon la revendication 1, **caractérisé en ce que** l'extérieur du corps (101) est adapté pour réaliser une étanchéité avec l'ouverture grâce à la fourniture d'un ou de plusieurs joints toriques (104) à l'intérieur de rainures de retenue.

3. Système de connexion de câble selon l'une quelconque des revendications précédentes, **caractérisé en ce que** le corps (101) est doté d'une nervure qui fait saillie de manière radiale (105) adaptée pour venir en prise avec l'ouverture prévue.

4. Système de connexion de câble selon l'une quelconque des revendications précédentes, **caractérisé en ce que** le bouchon qui fait saillie (220) est formé d'une pièce avec la jupe extérieure (210) ou est fixé à celle-ci par une bague d'étanchéité (109).

5. Système de connexion de câble selon l'une quelconque des revendications précédentes, **caractérisé en ce que** le bouchon (220) forme un joint d'étanchéité contre un ou plusieurs joints toriques disposés au niveau de la base du passage (110).

6. Système de connexion de câble selon l'une quelconque des revendications précédentes, **caractérisé en ce que** le bouchon (220) est doté d'une partie baril étendu qui connecte une partie base du bouchon (220) qui incorpore l'alésage intérieur et la partie extrémité du bouchon (220).

7. Unité connecteur (100) appropriée pour une utilisation dans un système de connexion selon l'une quelconque des revendications 1 à 6, l'unité connecteur comprenant : un corps plein (101) qui présente un extérieur adapté pour venir en prise et former un joint d'étanchéité imperméable à l'eau, avec les bords intérieurs de l'ouverture et qui présente également un alésage axial (102) qui s'étend à travers ; et des passages qui font saillie de manière axiale (110) disposés au niveau de l'une ou l'autre extrémité du corps (101), les bords intérieurs du passage (110) et les extrémités du corps (101) définissant des douilles de réception de bague (200), **caractérisé en ce que** les passages (110) sont dotés d'un rebord qui fait saillie vers l'extérieur (111) adapté pour venir en prise avec un rebord qui fait saillie vers l'intérieur (211) d'une jupe extérieure (210) d'une bague (200) et les rebords sont adaptés pour se dégager sous l'application d'un niveau de force axiale inférieur à celui la force axiale normale nécessaire pour retirer le câble ou le conduit de câbles de l'alésage axial (221) de la bague (200) ou de la force axiale normale nécessaire pour rompre le câble ou le conduit de câbles.

8. Unité connecteur (100) selon la revendication 7, **caractérisé en ce que** le corps (101) est doté d'une nervure qui fait saillie de manière radiale (105) adaptée pour venir en prise avec l'ouverture prévue.

9. Bague (200) appropriée pour une utilisation dans un système de connexion selon l'une quelconque des revendications 1 à 6, la bague comprenant : une jupe extérieure (210) adaptée pour s'ajuster autour de l'extérieur des passages qui font saillie (110) d'une unité connecteur (100) ; et un bouchon qui fait saillie (220), le bouchon (220) présentant un alésage axial (221) destiné à porter un câble ou un conduit de câbles et un extérieur adapté pour venir en prise et former un joint d'étanchéité imperméable à l'eau avec les bords intérieurs du bouchon définis par les passages (110) de l'unité connecteur (100), **caractérisé en ce que** la jupe extérieure (210) est dotée d'un rebord qui fait saillie vers l'intérieur (211) adapté pour venir en prise avec un rebord qui fait saillie vers l'extérieur (111) du passage (110) et les rebords sont adaptés pour se dégager sous l'application d'un niveau de force axiale inférieur à celui de la force axiale normale nécessaire pour retirer le câble ou le conduit de câbles de l'alésage axial de la bague (200) ou de la force axiale normale nécessaire pour rompre le câble ou le conduit de câbles.

10. Bague (200) selon la revendication 9, **caractérisée en ce que** le bouchon (220) forme un joint d'étanchéité contre un ou plusieurs joints toriques (104) disposés au niveau de la base du passage (110).

11. Bague (200) selon la revendication 9 ou la revendication 10, **caractérisée en ce que** le bouchon (220) est doté d'une partie baril étendu qui connecte une partie base du bouchon (220) qui incorpore l'alésage intérieur et la partie extrémité du bouchon (220).

12. Procédé destiné à permettre l'entrée d'un câble dans une canalisation, comprenant les étapes consistant à : prévoir une ouverture appropriée dans la canalisation ; insérer une unité connecteur (100) selon la revendication 7 ou la revendication 8 à l'intérieur de l'ouverture dans la canalisation ; doter une longueur de câble à l'intérieur de la canalisation et une longueur de câble à l'extérieur de la canalisation de bagues (200), selon l'une quelconque des revendications 9 à 11, ou doter une longueur de conduit de câbles à l'intérieur de la canalisation et une longueur de conduit de câbles à l'extérieur de la canalisation de bagues (200), selon l'une quelconque des revendications 9 à 11 ; et mettre en prise les bagues (200) avec les douilles de l'unité connecteur (100).

13. Procédé selon la revendication 12, **caractérisé en ce que** la canalisation est une canalisation d'approvisionnement en eau ou une canalisation d'eaux usées.

14. Procédé selon la revendication 12 ou la revendication 13, **caractérisé en ce que** le procédé comprend les étapes supplémentaires consistant à former un espace dans la canalisation, insérer une jonction en Y dans l'espace et insérer l'unité connecteur (100) dans l'extrémité ouverte d'une branche de la jonction en Y.

15. Réseau **caractérisé en ce qu'**un ou plusieurs câbles situés à l'intérieur du réseau sont connectés par un système de connecteur selon l'une quelconque des revendications 1 à 6, une unité connecteur (100) selon la revendication 7 ou la revendication 8, une bague (200) selon l'une quelconque des revendications 9 à 11, ou dans lequel un ou plusieurs câbles sont introduits dans des canalisations en faisant appel à un procédé selon l'une quelconque des revendications 12 à 14.
